# EUROPEAN PATENT APPLICATION

(11) **EP 1 310 810 A2**
(43) Date of publication of application: **14.05.2003**
(21) Application number: 02257164.0
(22) Date of filing: 16.10.2002
(51) Int. Cl.: G02B 6/35

(54) **Utilising feedback for control of a switch actuator**

(30) Priority: 19.10.2001 US 41793
(71) Applicant: Litton Systems, Inc., Los Angeles, CA 90067 (US)
(72) Inventor: Kouns, Heath Elliot, Pearisburg, Virginia 24134 (US)
(74) Representative: Mackenzie, Andrew Bryan

(57) **Abstract**

A varying signal, which may be a feedback signal, is combined with a control signal to control the actuators (117 and 119) of a switch. The method compensates for varying temperature conditions as well as variations in the manufacturing process of the actuators (117 and 119) and a member (101) of the switch that is attached to the actuators (117 and 119), which member (101) changes positions to change the state of the switch. The varying signal, in combination with the control signal, determines a pulse width, during which time energy is applied to the actuators (117 and 119).

## Description

### Field of the Invention

This invention relates to actuators, including but not limited to the control of actuators with optical switches.

### Background of the Invention

Telecommunications service providers are driven by the need for increased bandwidth to move toward all-optical networks in both long haul and metropolitan applications. Dense wave-division multiplexing (DWDM) technology is evolving as a way of supporting more signals on a single fiber. DWDM technology is based on the utilization of multiple-laser sources whose wavelengths are separated by as little as 0.2 nanometers. Technologies such as gratings, thin-film filters, and arrayed waveguides are used to combine (multiplex) multiple signals modulated at different wavelengths onto a single fiber and to separate (demultiplex) these signals at the destinations. At the locations where the signals are demultiplexed, a 2x2 optical switch may be used to drop out and add back a desired signal at a particular wavelength. This combination of demultipexers, switches, and multipexers is referred to as a Configurable Optical Add/Drop Multiplexer (COADM).

Optical switches are utilized in applications other than COADMs. A 1x1 configuration may be used to keep a laser off line while warming up. A 1x2 version may be utilized to restore a network by switching the signal to a different fiber when its serving fiber is cut or damaged. These applications and others have created demand for reliable, fast, latchable optical switches. A bi-stable single mode optical switch is such a switch. Two types of actuators are typically used to change the state of an optical switch: thermal and electrostatic. Thermal actuators operate in the 5 to 20 volt range, whereas electrostatic actuators require 50 to 90 volts for operation.

Although thermal actuators are more desirable to use because of their lower operating voltage, thermal actuators are very temperature sensitive. As a result, thermal actuators often have a limited operating temperature range. Because a temperature range of -40 to 85 °C is typically required of an optical switch, thermal actuators have not been utilized to their full potential because of the difficulty in obtaining uniform and repeatable responses over such a wide temperature range.

In addition, thermal actuators depend on the expansion of a micro-fabricated beam or member to accomplish a task. The time during which the member expands is determined by the thermal mass of the member as well as the mass of the load that is attached to the member. Departures in thermal mass from nominal design values occur due to variations in manufacturing material and processes.

Accordingly, there is a need for a way to reliably utilize a thermal actuator with an optical switch while operating over large temperature ranges and while compensating for variations caused by manufacturing deviations.

### Summary

A method and apparatus for controlling actuators provides a varying signal that reflects at least one difference between at least two sensors associated with a member of a switch. The varying signal is combined with a control signal, thereby yielding a pulse signal. The pulse signal is applied to an actuator that generates force to change the member from a first position to a second position of the switch.

### Brief Description of the Drawings

FIG. 1 is a diagram illustrating two states of an optical switch in accordance with the invention.
FIG. 2 is a diagram of a feedback circuit for use with an actuator in accordance with the invention.
FIG. 3 is a series of timing diagrams illustrating operation of the feedback circuit in accordance with the invention.
FIG. 4 is a series of timing diagrams illustrating operation of the feedback circuit over varying conditions in accordance with the invention.
FIG. 5 is a flowchart showing a method of utilizing feedback to control an actuator in accordance with the invention.

### Description of a Preferred Embodiment

The following describes an apparatus for and method of combining a feedback signal with a control signal to control the actuators of a switch. The method compensates for varying temperature conditions as well as variations in the manufacturing process of the actuator and a member of the switch that is attached to the actuator, which member changes states to change the state of the switch. A feedback signal, in combination with a control signal, determines a pulse width, during which time energy is applied to the actuators. The method and apparatus utilize status sensors that may be built into the member of the switch. The status sensors are utilized to determine the position of the member, i.e., its deflection from a bi-stable state or position and to generate the feedback signal. The method is particularly useful with thermal actuators that are used with optical switches, although the method may be utilized with other actuators and devices other than optical switches.

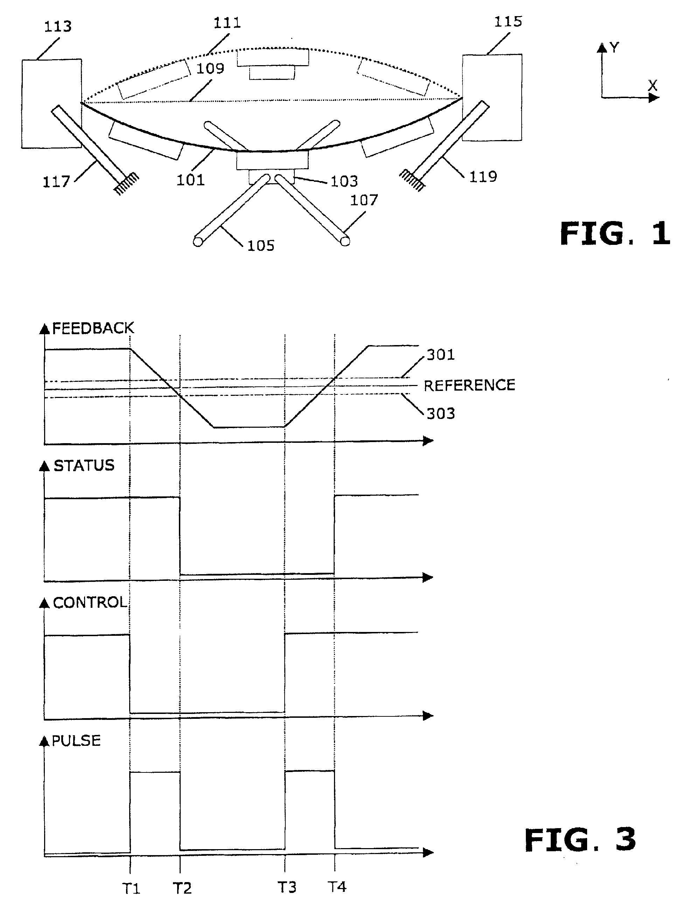

A diagram illustrating two states of an optical switch is shown in FIG. 1. The switch shown is a latching MEMS switch that is similar to the bi-stable silicon beam switch described in U.S. Patent Application No. 09/794,773, filed on February 27, 2001 on behalf of Robert E. Stewart et al. and titled "Bi-stable Micro Actuator and Optical Switch," the entire application of which is incorporated herein by reference. Such a switch is a MicroElectro Mechanical Systems (MEMS) device, although the present invention may be applied to other types of switches.

As shown in FIG. 1, a support member 101 (which may be referred to as a beam) of the switch is operably coupled to a mirror 103 that is shown in a blocking state, i.e., a mirror 103 is placed between optical fibers 105 and 107 to prevent light signals from passing through the fibers 105 and 107. When it is desirable to allow signals to pass through the fibers 105 and 107, the mirror 103 is removed from the path of the fibers. Thus, it is desirable to move the member 101 from its down (blocking) state through a neutral position 109 and into an up state or non-blocking state 111. Thus, the switch has two stable states or positions, i.e., the switch is a bi-stable device. Because the member 101 and mirror 103 are operably coupled together, the member 101 and the mirror 103 move together. The member 101 is moved between states by the consecutive heating and cooling of the actuators 117 and 119, which thermal activity produces an outward and then an inward force to the supports 113 and 115 that are operably connected to the member 101. The supports 113 and 115 serve to operably couple the actuators 117 and 119 to the ends of member 101 so that when the actuators heat up and expand, force is applied to the ends of member 101.

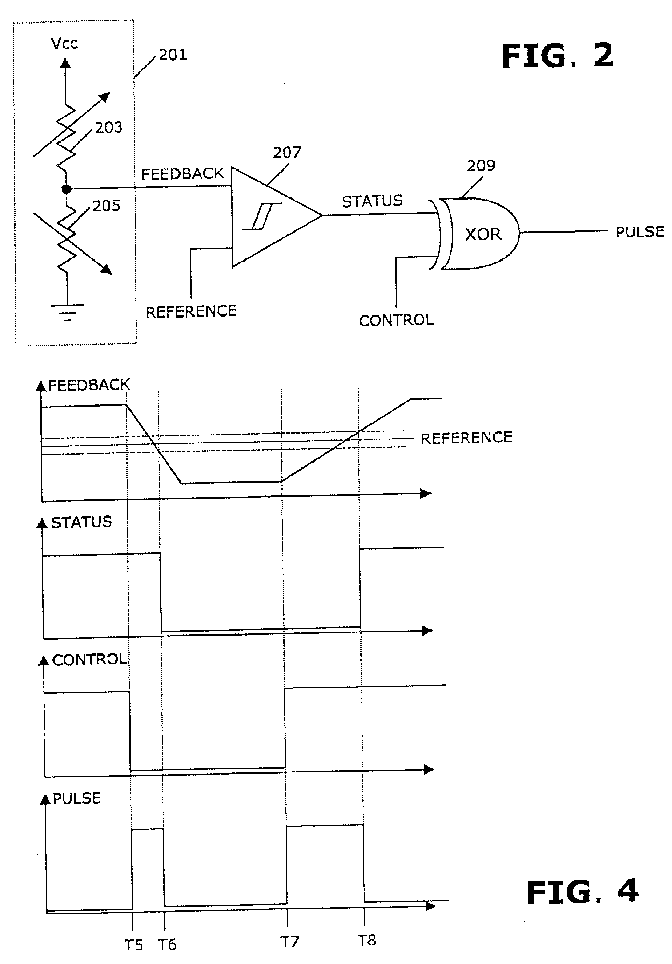

A pulse signal applied to the actuators 117 and 119 determines how long thermal expansion occurs in the actuators 117 and 119. While the pulse signal, such as shown in FIG. 3 and FIG. 4, is in a logical high state, the actuators 117 and 119 apply outward forces to the supports 113 and 115. For example, thermal actuators apply forces due to expansion and contraction (as described below), whereas electrostatic actuators apply electrostatic forces, as known in the art. Other types of actuators apply other types of forces. While the forces are applied to the supports 113 and 115, they are moved outward along the X-axis. As the supports 113 and 115 move outward, compressive forces are relaxed in the member 101, allowing it to move toward the neutral position. When the mirror beam approaches the neutral position, the current passing through the actuators 117 and 119 is cut off. As the actuators cool and retract, the supports 113 and 115 are forced inward, and the mirror 103 is forced to the other bi-stable state by the cooling of the actuators and the mechanical inertia of the member 101. Each time an appropriate pulse signal is applied to the actuators 117 and 119, the switch changes state from one bi-stable position to another bi-stable position.

Because of variations in manufacturing of MEMS and other such devices, e.g., variations in size, shape, etch rates, and layer thicknesses, the actuators 117 and 119 require different amounts of energy to properly activate the member 101. Likewise, changes in ambient temperature affect the amount of energy that is needed to change the member 101 from one state to another. The pulse applied to the actuator needs to be turned off at the right instant in order to reliably flip the switch member 101 from one state (position) to another. If the pulse applied to the actuator is too short, the member 101 will not have enough energy to pass the neutral position and will revert back to its previous state. If the pulse is too long, the member 101 will pass the neutral position, but because force is still being applied outward on the beam ends, the member 101 will slow, stop, and come back toward the neutral position. If the pulse is turned off at this point, the member 101 may again return to its previous state.

A diagram of a feedback circuit that may be utilized to provide an appropriate pulse signal to an actuator is shown in FIG. 2. This circuit is particularly useful for a thermal actuator that is utilized with an optical switch. A feedback device 201 comprises a pair of devices 203 and 205 having variable impedances arranged in a half-bridge. The feedback signal generated at the mid-point of these devices 203 and 205 varies in a range about a nominal reference point. For example, if Vcc is 5 V, the nominal reference point is 2.5 V. In the preferred embodiment, the two devices are sensors, including, but not limited to, piezoelectric, capacitive, or contact sensors. Alternatively, a current rather than a voltage may be utilized as the feedback signal from the feedback device 201.

A sensor 203 or 205 is attached near the ends of the member 101. Optimally, the sensors 203 and 205 react in opposite directions. Thus, as the member 101 moves from one state to the other, the resistance of one sensor increases while the other decreases. If the two sensors 203 and 205 are connected in a half bridge arrangement as shown in FIG. 2, the voltage signal at the midpoint varies in some range about the nominal reference point. The sensors 203 and 205 sense the position (up, down, and anywhere in between) of the member 101, as is known in the art.

Because the two sensors 203 and 205 behave as varying impedances, they vary according to changes in ambient temperature as well as differences in the manufacturing of the sensors. The sensors are typically manufactured at the same time as the switch, and typically vary in the same way or at least proportionally with the way that the switch is manufactured. Thus, the two sensors 203 and 205 provide a gauge of the variance in pulse width necessary to switch the optical switch between states.

The sensors 203 and 205 may be connected to the member 101 during manufacturing, e.g., formed when the switch (or other device) is manufactured or added after the switch is formed. A sensor 203 or 205 is placed near each end of the member 101 near the supports 113 and 115. As the member 101 moves from one state to another, the impedance of the sensors 203 and 205 changes: one increases while the other decreases. When the two varying impedances 203 and 205 are connected together in series, and a voltage is applied across the series-connected devices, the voltage level at the midpoint of the devices 203 and 205 changes. The magnitude of change corresponds to a position of the member 101, e.g., a measure of the position or deflection from a reference point. When the member 101 is in the middle or neutral state, the impedances should be equal, thus generating a feedback signal at the midpoint equal to half of the voltage applied across the two sensors.

The feedback signal is input to a comparator 207 that has a hysteresis associated with it. The width of the hysteresis band is determined by placing a resistive feedback network around the comparator, as is known in the art. The hysteresis may be tuned to the circuit and, in cases where the total change of the varying signal is small, the hysteresis band may be made so small that it is essentially eliminated without affecting the operation of the feedback device 201. Also input to the comparator 207 is a reference signal that is typically approximately half of Vcc or the mid-range of the feedback device 201 if the devices 203 and 205 identical. The comparator 207 compares the reference signal and the feedback signal, which is a varying signal that is, for example, a varying voltage signal, thereby outputting a status signal. The status signal is a signal that represents the current status, i.e., the current position (up or down) of the switch member 101. This status signal takes into account the variable nature of the feedback device, i.e., it takes into account any variations in ambient temperature or manufacturing process that may affect how quickly or slowly the shifting device, such as the mirror 103, moves in reaction to energy, e.g., the heat generated in the actuators 117 and 119. Thus, the status signal represents the current state of the switch and helps to more accurately determine a pulse to apply to the actuators 117 and 119. A control signal is exclusively ORed (XORed) with the status signal via an exclusive OR (XOR) gate 209 that outputs the pulse signal.

Timing diagrams illustrating operation of the feedback device of FIG. 2 are shown in FIG. 3. In this example, thermal actuators 203 and 205 are utilized. A feedback signal in addition to the reference signal and the hysteresis levels employed by the comparator 207 are shown in the top timing diagram of FIG. 3. The second timing diagram shows the status signal as output by the comparator 209. The third timing diagram shows the control signal as applied to the circuit that controls the switch. The control signal may be applied by any control mechanism or human operator as desired to change the state of the switch at the desired time. The fourth timing diagram shows the pulse signals that are applied to the thermal actuators 117 and 119 in order to switch the optical switch between its two positions or states. Generally, the pulse width begins when the control signal changes logic levels and ends when the status signal changes levels.

Prior to time T1, the mirror 103 is in the up position 111. At time T1, the control signal is dropped from a high state (logical high) to a low state (logical low), indicating a desire to change the position of the switch from the up position, or non-blocking state, to the down position, or blocking state. At time T1, the pulse signal begins to go high, causing the actuators 117 and 119 to heat and expand, thus forcing the ends of the member 101 outward, and the member 101 begins to drop. The sensors 203 and 205 detect that the member 101 is moving, and because the sensors vary in opposite directions, the feedback signal begins to drop. The comparator uses the feedback signal to determine when the mirror 103 is near the neutral state. The pulse applied to the switch remains high between times T1 and T2 because the status signal has not changed. Once the feedback signal drops below the lower hysteresis level 303 of the comparator 207, the status signal goes low, indicating a change in state, and the pulse is ended at time T2, thereby turning off the current to the actuators 117 and 119, which then cease to provide force to the supports 113 and 115. After the pulse ends, the mechanical inertia of the member 101 and mirror 103 and the cooling action of the thermal actuators causes the member 101 and mirror 103 to continue toward its other stable state. The sensor feedback signal continues to fall after the pulse has ended, showing the position of the mirror 103 until it reaches a stable state.

A similar process occurs when changing the mirror 103 from the down (blocking) state to the up (non-blocking) state. Prior to time T3, the control signal, status signal, feedback signal, and pulse signal are all low. At time T3, the control signal is brought high to change the mirror 103 from down to up, thereby initiating a pulse at the actuators 117 and 119. At this time, the feedback signal begins to rise, and continues to rise until it reaches its maximum point. When the feedback signal exceeds the upper hysteresis level 301 of the comparator 207, the status signal changes to a logical high state, thereby ending the pulse at time T4. The XOR gate outputs a high logic level when both inputs are different, but outputs a low logic level while the inputs are the same. Thus, an XOR gate provides logic that shows when two signals are different by providing an output of a logic high, as known in the art.

The present invention, through the use of the feedback path, provides the ability to adjust or compensate for variances in ambient temperature and manufacturing processes. For example, when the member 101 is moving more slowly, e.g., when the actuators are colder or larger, more energy needs to be applied to move the member, thus the pulse needs to be wider. Conversely, when the actuators are moving more quickly, e.g., when the device is warm or smaller, less energy needs to be applied to move the member, thus the pulse needs to be narrower.

A series of timing diagrams illustrating operation of the feedback circuit over varying conditions is shown in FIG. 4. A shorter pulse, as shown between times T5 and T6 is created when the feedback signal moves more quickly through the reference level. This happens, for example, when the device is very hot or when it is manufactured in such a way that pulses applied to the actuators 117 and 119 cause the actuators to expand more quickly, thus the feedback device 201 generates a feedback signal that more quickly moves past the reference signal. Conversely, the pulse width that is generated between time T7 and T8 is wider, to compensate for more slowly moving devices, such as those in colder temperatures or devices manufactured in such a way that the actuators 117 and 119 expand more slowly.

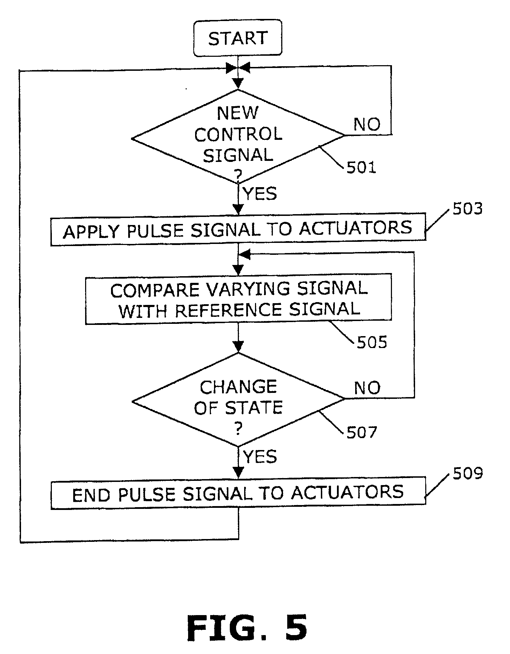

A flowchart showing a method of utilizing feedback to control an actuator is shown in FIG. 5. If at step 501 a new control signal is present, indicating a desire to change the state of the switch, the process continues with step 503 where an actuation signal, in the form of a pulse signal, is applied to the actuators 117 and 119. At step 505, a feedback signal, which is a varying signal, is compared with a reference signal. If at step 507, the state of the status signal has not changed, the process continues with step 505. If at step 507 the state of the status signal has changed, the process continues with step 509, where pulse signal being applied to the actuators 117 and 119 is terminated, and the process continues with step 501. Throughout the process of the flowchart of FIG. 5, the varying signal is provided by the feedback device 201, and the status signal is combined with the control signal.

The present invention provides a closed-loop feedback method and apparatus that reliably causes a switch to change states under different circumstances, including different ambient temperatures and varying manufacturing processes. Thus, the present invention provides a way to utilize thermal actuators with optical switches, thereby eliminating the need for higher voltages to be brought to switch boards. The feedback device/circuit compensates for differences in ambient temperature, thereby allowing thermal actuators to be utilized over a temperature range more desirable for optical switches. The implementation of the feedback circuit improves the yield of the device being produced, because it eliminates the need for every device in a production run to be identical. The circuit also optimizes the switching time for each device because the circuit actively senses the switch position, thereby providing the fastest possible switching period under any set of circumstances.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. An apparatus comprising:
a device that generates a varying signal relative to a deflection of a member between a first position and a second position of the member;
a combiner for combining the varying signal with a control signal, thereby yielding a pulse signal;
an output device that provides the pulse signal to an actuator such that the pulse signal changes the member from the first position to the second position.

2. The apparatus of claim 1, wherein the combiner comprises:
a comparator, operably coupled to the device, which comparator compares the varying signal and a reference voltage, thereby yielding a comparison signal;
a logic device for combining the comparison signal with a control signal, thereby yielding the pulse signal.

3. The apparatus of claim 1, wherein the device is a feedback device.

4. The apparatus of claim 1, wherein the pulse signal comprises a pulse while the comparison signal and a control signal are at different logic levels.

5. The apparatus of claim 1, wherein the varying signal accounts for variations in temperature.

6. The apparatus of claim 1, wherein the varying signal accounts for variations in manufacturing of the device.

7. The apparatus of claim 1, wherein another pulse signal changes the member from the second position to the first position.

8. The apparatus of claim 1, wherein the varying signal is a varying voltage signal.

9. The apparatus of claim 1, wherein the actuator is a thermal actuator.

10. The apparatus of claim 1, wherein the actuator is an electrostatic actuator.

11. The apparatus of claim 1, wherein the device comprises at least two piezoelectric sensors.

12. The apparatus of claim 1, wherein the device comprises at least two capacitive sensors.

13. The apparatus of claim 1, wherein the device comprises at least two contact sensors.

14. The apparatus of claim 1, wherein the member is part of a switch.

15. The apparatus of claim 1, wherein the member is a bi-stable mirror support beam that is part of an optical switch.

16. An apparatus comprising:
a device comprising at least two sensors that are operably coupled to a member, which feedback device outputs a varying signal;
a comparator, operably coupled to the device and arranged and constructed to compare the varying signal and a reference voltage, thereby yielding a status signal;
a logic device, operably coupled to the comparator and arranged and constructed to output a pulse signal while the status signal and a control signal are logically different, thereby yielding a pulse signal;
an output device that provides the pulse signal to an actuator such that the pulse signal changes the member from a first position to a second position.

17. The apparatus of claim 16, wherein the varying signal accounts for variations in temperature.

18. The apparatus of claim 16, wherein the varying signal accounts for variations in manufacturing of the device.

19. The apparatus of claim 16, wherein the device generates the varying signal reflective of a deflection of the member between the first position and the second position.

20. The apparatus of claim 16, wherein the device is a feedback device.

21. The apparatus of claim 16, wherein another pulse signal changes the member from the second position to the first position.

22. The apparatus of claim 16, wherein the varying signal is a varying voltage varying signal.

23. The apparatus of claim 16, wherein the actuator is a thermal actuator.

24. The apparatus of claim 16, wherein the actuator is an electrostatic actuator.

25. The apparatus of claim 16, wherein the device comprises at least two of the following: piezoelectric sensors, capacitive sensors, and contact sensors.

26. The apparatus of claim 16, wherein the member is part of a switch.

27. The apparatus of claim 16, wherein the member is a bi-stable mirror support beam that is part of an optical switch.

28. A method comprising the steps of:
providing a varying signal that reflects at least one difference between at least two sensors associated with a member of a switch;
combining the varying signal with a control signal, thereby yielding a pulse signal;
applying the pulse signal to an actuator that generates force to change the member from a first position to a second position of the switch.

29. The method of claim 28, wherein the step of combining comprises the steps of:
comparing the varying signal with a reference signal, thereby yielding a comparison signal;
generating a pulse while the comparison signal and the control signal are different, thereby yielding the pulse signal.

30. The method of claim 28, wherein the varying signal accounts for variations in temperature.

31. The method of claim 28, wherein the varying signal accounts for variations in manufacturing of the switch.

32. The method of claim 28, wherein the varying signal is proportional to a deflection of the member between the first position and the second position of the switch.

33. The method of claim 28, further comprising the step applying another pulse signal to change the member from the second position to the first position.

34. The method of claim 28, wherein the varying signal is a voltage-varying signal.

35. The method of claim 28, wherein the actuator is a thermal actuator.

36. The method of claim 28, wherein the actuator is an electrostatic actuator.

37. The method of claim 28, wherein the at least two sensors are at least two of the following: piezoelectric sensors, capacitive sensors, and contact sensors.

38. The method of claim 28, wherein the switch is an optical switch having a bi-stable mirror support beam.
